# EUROPÄISCHE PATENTANMELDUNG

(11) **EP 4 509 212 A2**
(43) Veröffentlichungstag der Anmeldung: **19.02.2025**
(21) Anmeldenummer: 24216718.7
(22) Anmeldetag: 07.11.2019
(51) Int. Cl.: B01J 37/02

(54) **KATALYTISCH AKTIVER PARTIKELFILTER MIT HOHER FILTRATIONSEFFIZIENZ**

(30) Priorität: 08.11.2018 DE 102018127955
(62) Teilanmeldung aus: 19801525.7
(71) Anmelder: Umicore AG & Co. KG, 63457 Hanau-Wolfgang (DE)
(72) Erfinder: Foerster, Martin, 63654 Buedingen (DE); Koch, Juergen, 63457 Hanau (DE); Gensch, Manuel, 48465 Schuettorf (DE); Deibel, Naina, 64319 Pfungstadt (DE); Oltersdorf, Antje, 79102 Freiburg (DE); Schoenhaber, Jan, 64287 Darmstadt (DE)

(57) **Zusammenfassung**

Die vorliegende Erfindung ist auf einen Wandflussfilter, ein Verfahren zu seiner Herstellung und die Verwendung des Filters in der Minderung schädlicher Abgase und feiner Partikel eines Verbrennungsmotors gerichtet.

## Beschreibung

Die vorliegende Erfindung ist auf einen Wandflussfilter, ein Verfahren zu seiner Herstellung und die Verwendung des Filters in der Minderung schädlicher Abgase und feiner Partikel eines Verbrennungsmotors gerichtet.

Zur Entfernung der Partikelemissionen und Reduzierung der Schadstoffe in Abgasen sind Dieselpartikelfilter bzw. Benzinpartikelfilter mit und ohne zusätzliche katalytisch aktive Beschichtung geeignete Aggregate. Dies sind Wandflusswabenkörper, die als Katalysatorträger, Träger oder Substratmonolithe bezeichnet werden. Zur Erfüllung der gesetzlichen Normen ist es für die aktuellen und zukünftigen Applikationen zur Abgasnachbehandlung von Verbrennungsmotoren aus Kostengründen aber auch aus Bauraumgründen wünschenswert, Partikelfilter mit anderen katalytisch aktiven Funktionalitäten zu kombinieren. Die katalytisch aktive Beschichtung kann sich dabei auf der Oberfläche bzw. in den diese Oberfläche bildenden Wänden der Kanäle befinden. Die katalytisch aktive Beschichtung wird häufig in einem sogenannten Beschichtungsvorgang in Form einer Suspension auf den Katalysatorträger aufgebracht. Viele derartige Prozesse sind in der Vergangenheit von Autoabgaskatalysatorherstellern hierzu veröffentlicht worden (EP1064094B1, EP2521618B1, WO10015573A2, EP1136462B1, US6478874B1, US4609563A, WO9947260A1, JP5378659B2, EP2415522A1, JP2014205108A2). Der Einsatz eines Partikelfilters - ob katalytisch beschichtet oder nicht - führt zu einer im Vergleich zu einem Durchflussträger gleicher Abmessungen merklichen Erhöhung des Abgasgegendrucks und damit zu einer Verringerung des Drehmoments des Motors oder möglicherweise vermehrtem Kraftstoffverbrauch. Um den Abgasgegendruck nicht noch weiter zu erhöhen, werden die Mengen an oxidischen Trägermaterialien für die katalytisch aktiven Edelmetalle des Katalysators bzw. oxidischen Katalysatormaterialien bei einem Filter in der Regel in geringeren Mengen aufgebracht als bei einem Durchflussträger. Dadurch ist die katalytische Wirksamkeit eines katalytisch beschichteten Partikelfilters einem gleich groß dimensionierten Durchflussmonolithen häufig unterlegen.

Es hat schon einige Anstrengungen gegeben, Partikelfilter bereitzustellen, die eine gute katalytische Aktivität durch eine aktive Beschichtung aufweisen und einen dennoch möglichst geringen Abgasgegendruck zeigen. Im Hinblick auf einen niedrigen Abgasgegendruck hat es sich als günstig erwiesen, wenn die katalytisch aktive Beschichtung nicht als Schicht auf den Kanalwänden eines porösen Wandflussfilters befindlich ist, sondern die Kanalwände des Filters mit dem katalytisch aktiven Material durchsetzt sind (WO2005016497A1, JPH01-151706, EP1789190B1). Hierfür wird die Partikelgröße der katalytischen Beschichtung so gewählt, dass die Partikel in die Poren der Wandflussfilter eindringen und dort durch Kalzinieren fixiert werden können. Nachteilig an katalytisch aktiven Filtern mit einer In-Wand-Beschichtung ist, dass die Menge an katalytisch wirksamer Substanz durch das Aufnahmevermögen der porösen Wand begrenzt ist.

Es hat sich gezeigt, dass durch Aufbringen der katalytisch aktiven Substanzen auf die Oberflächen der Kanalwände eines Wandflusswabenkörpers eine Erhöhung der Umsetzung der Schadstoffe im Abgas erzielt werden kann. Auch Kombinationen von Aufwand- und In-Wand-Beschichtung mit katalytisch aktivem Material sind möglich, wodurch die katalytische Performance weiter gesteigert werden kann, ohne dass sich der Staudruck wesentlich erhöht.

Neben der katalytischen Wirksamkeit ist eine weitere Funktionalität des Filters, die durch eine Beschichtung verbessert werden kann, seine Filtrationseffizienz, also die Filterwirkung selbst. In der WO2011151711A1 wird eine Methode beschrieben, mit der ein nicht beschichteter oder katalytisch beschichteter Filter, der das katalytische aktive Material in den Kanalwänden trägt (In-Wand-Beschichtung mit Washcoat) mit einem trockenen Aerosol beaufschlagt wird. Das Aerosol wird durch die Verteilung eines pulverförmigen hochschmelzenden Metalloxids bereitgestellt und mittels eines Gasstroms über die Einlassseite eines Wandflussfilters geführt. Hierbei agglomerieren die einzelnen Partikel mit einer Partikelgröße von 0,2 µm bis 5 µm zu einem verbrückten Netzwerk an Partikeln und werden als Schicht auf der Oberfläche der einzelnen den Wandflussfilter durchziehenden Einlasskanäle abgeschieden. Die typische Beladung eines Filters mit dem Pulver beträgt zwischen 5 g und 50 g pro Liter Filtervolumen. Es wird ausdrücklich darauf hingewiesen, dass es nicht erwünscht ist, mit dem Metalloxid eine Beschichtung in den Poren des Wandflussfilters zu erreichen.

Eine weitere Methode zur Erhöhung der Filtrationseffizienz von katalytisch nicht aktiven Filtern wird in der WO2012030534A1 beschrieben. Hierbei wird auf den Wänden der Strömungskanäle der Einlassseite eine Filtrationsschicht ("discriminating layer") durch Ablagerung von keramischen Partikel über ein Partikelaerosol erzeugt. Die Schichten bestehen aus Oxiden von Zirkon, Aluminium oder Silicium, bevorzugt in Faserform von 1 nm bis 5 µm und haben eine Schichtdicke von mehr als 10 µm, in der Regel 25 µm bis 75 µm. Nach dem Beschichtungsprozess werden die aufgetragenen Pulverpartikel in einem Wärmeprozess kalziniert.

Ein weiteres Verfahren bei dem zur Erhöhung der Filtrationseffizienz von katalytisch nicht aktiven Wandflussfiltern eine Membran ("trapping layer") auf den Oberflächen der Einlasskanäle von Filtern erzeugt wird, ist in der Patentschrift US8277880B2 beschrieben. Die Filtrationsmembran auf den Oberflächen der Einlasskanäle wird durch Durchsaugen eines mit Keramikpartikeln (z. B. Siliciumcarbid, Cordierit) beladenen Gasstroms realisiert. Der Wabenkörper wird nach dem Aufbringen der Filterschicht bei Temperaturen von größer 1000°C gebrannt um die Haftfestigkeit der Pulverschicht auf den Kanalwänden zu erhöhen. In EP2502661A2 und EP2502662B1 werden weitere Aufwandbeschichtungen durch Pulverapplikation erwähnt.

Eine Beschichtung innerhalb der Poren eines Wandflussfilteraggregats mittels Verdüsung von trockenen Partikeln wird in der US8388721 B2 beschrieben. Hier soll allerdings das Pulver tief in die Poren eindringen. 20 % bis 60 % der Oberfläche der Wand soll für Rußpartikel zugänglich, demnach offenbleiben. Abhängig von der Strömungsgeschwindigkeit des Pulver-Gas-Gemisches kann ein mehr oder minder starker Pulvergradient zwischen Einlass- und Auslassseite eingestellt werden. Die Poren der Kanalwände des nach US8388721 B2 mit Pulver in den Poren beschichteten Filters können nachträglich mit einer katalytisch aktiven Komponente beschichtet werden. Auch hier befindet sich das katalytisch aktive Material in den Kanalwänden des Filters.

Ebenfalls wird die Einbringung des Pulvers in die Poren, z. B. mithilfe eines Aerosolgenerators, in der EP2727640A1 beschrieben. Hier wird ein nicht katalytisch beschichteter Wandflussfilter mit einem z. B. Aluminiumoxidpartikel enthaltenden Gasstroms dergestalt beschichtet, dass die kompletten Partikel, die eine Partikelgröße von 0,1 µm bis 5 µm aufweisen, als poröse Füllung in den Poren des Wandflussfilters abgeschieden werden. Die Partikel selber können eine weitere Funktionalität des Filters zusätzlich zu der Filterwirkung realisieren. Beispielhaft werden diese Partikel in einer Menge von mehr als 80 g/l bezogen auf das Filtervolumen in den Poren des Filters abgeschieden. Sie füllen dabei 10 % bis 50 % des Volumens der gefüllten Poren in den Kanalwänden aus. Dieser Filter weist sowohl mit Ruß beladen wie auch ohne Ruß eine gegenüber dem unbehandelten Filter verbesserte Filtrationseffizienz bei einem geringeren Abgasgegendruck des mit Ruß beladenen Filters auf.

In der WO2018115900A1 werden Wandflussfilter mit einer ggf. trockenen synthetischen Asche dergestalt beschichtet, dass eine kontinuierliche Membranschicht auf den Wänden des ggf. katalytisch beschichteten Wandflussfilters entsteht.

Alle in diesem Stand der Technik aufgeführten Patente haben das Ziel, die Filtrationseffizienz eines Filters durch eine Belegung des Filters mit einem Pulver zu erhöhen. Die derart hinsichtlich Filtrationseffizienz optimierten Filter können auch vor der Pulverbeschichtung eine katalytisch aktive Beschichtung in den porösen Kanalwänden tragen. In keinem der Beispiele finden sich jedoch Hinweise darauf, gleichzeitig die katalytische Wirkung eines Filters und die Erhöhung der Filtrationseffizienz zu optimieren. Es besteht daher weiterhin Bedarf an Partikelfiltern, bei denen sowohl die katalytische Aktivität und die Filtrationseffizienz im Hinblick auf den Abgasgegendruck optimiert sind.

Aufgabe der vorliegenden Erfindung ist es, einen entsprechenden Partikelfilter anzugeben, bei dem eine ausreichende Filtrationseffizienz mit einer möglichst geringen Erhöhung des Abgasgegendrucks und einer hohen katalytischen Aktivität gekoppelt ist.

Diese und weitere sich aus dem Stand der Technik in naheliegender Weise ergebenden Aufgaben werden durch die Angabe eines Partikelfilters gemäß den Ansprüchen 1 bis 13 erfüllt. Ansprüche 14 - 16 sind auf die Herstellung eines erfindungsgemäßen Partikelfilters gerichtet. Anspruch 17 zielt auf die Verwendung des Partikelfilters zur Abgasnachbehandlung von Verbrennungsmotoren ab.

Die vorliegende Erfindung bezieht sich auf einen Wandflussfilter zur Entfernung von Partikeln aus dem Abgas von Verbrennungsmotoren, wobei dieser Wandflussfilter eine Länge L und mindestens eine katalytisch aktive Beschichtung Y und/oder Z und Kanäle E und A umfasst, die sich parallel zwischen einem ersten und einem zweiten Ende des Wandflussfilters erstrecken und die durch poröse Wände getrennt sind, sowie die Oberflächen O_{E} bzw. O_{A} bilden, und wobei die Kanäle E am zweiten Ende und die Kanäle A am ersten Ende verschlossen sind. Dadurch, dass sich in einem solchen Wandflussfilter die Beschichtung Y in den Kanälen E auf den Wänden der Oberflächen O_{E} befindet, wobei sich die Beschichtung auf den Wänden der Oberfläche O_{E} ausgehend vom ersten Ende des Wandflussfilters auf einer Länge von weniger als der Länge L erstreckt, und sich die Beschichtung Z in den Kanälen A auf den Wänden der Oberflächen O_{A} befindet, wobei sich die Beschichtung auf den Wänden der Oberfläche O_{A} ausgehend vom zweiten Ende des Wandflussfilters auf einer Länge von weniger als der Länge L erstreckt, und wobei der Einlassbereich E des Filters zusätzlich mit zumindest einem trockenen Pulvergasaerosol beaufschlagt worden ist, gelangt man äußerst überraschend zur Lösung der gestellten Aufgabe. Durch die Beaufschlagung eines in konventioneller Art nasstechnisch zoniert beschichteten Wandflussfilters (z.B. wie in der US 8794178 beschrieben), bei dem sich die katalytisch aktive Beschichtung auf der Oberfläche der Kanalwände befindet und den man nach dem Trocknen und/oder Kalzinieren mit einem trockenen Pulvergasaerosol beschichtet, erhält man einen Wandflussfilter mit überaus guter Filtrationseffizienz und nur wenig erhöhtem Abgasgegendruck und gleichzeitig hervorragender katalytischer Wirksamkeit.

Die hier beschriebenen katalytisch beschichteten und anschließend mit Pulver beaufschlagten Filter unterscheiden sich von denen, die im Abgasstrang eines Fahrzeugs durch Ascheablagerung während des Betriebs entstehen. Erfindungsgemäß werden die katalytisch aktiven Filter gezielt mit einem bestimmten, trockenen Pulver bestäubt. Dies führt dazu, dass die Balance zwischen Filtrationseffizienz und Abgasgegendruck von Anfang an gezielt eingestellt werden kann. Nicht mitumfasst von der vorliegenden Erfindung sind daher Wandflussfilter, bei denen undefinierte Ascheablagerungen aus der Verbrennung von Kraftstoff z.B. im Zylinder während des Fahrbetriebs oder mittels eines Brenners erfolgt sind.

Als Wandflussmonolithe oder Wandflussfilter können alle im Stand der Technik üblichen keramischen Materialien eingesetzt werden. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine Partikelfilterwirkung bedingt. Durch die Porosität, Poren-/Radienverteilung, und Dicke der Wand kann die Filtrationseigenschaft für Partikel ausgelegt werden. Die Porosität der unbeschichteten Wandflussfilter beträgt in der Regel mehr als 40 %, generell von 40 % bis 75 %, besonders von 50 % bis 70 % [gemessen nach DIN 66133 - neueste Fassung am Anmeldetag]. Die durchschnittliche Porengröße der unbeschichteten Filter beträgt wenigstens 7 µm, z. B. von 7 µm bis 34 µm, bevorzugt mehr als 10 µm, insbesondere mehr bevorzugt von 10 µm bis 25 µm oder ganz bevorzugt von 15 µm bis 20 µm [gemessen nach DIN 66134 neueste Fassung am Anmeldetag]. Die fertiggestellten Filter (katalytisch beschichtet) mit einer Porengröße von in der Regel 10 µm bis 20 µm und einer Porosität von 50 % bis 65 % sind besonders bevorzugt.

Die katalytischen Beschichtungen Y bzw. Z des mit dem Pulver zu beaufschlagenden Wandflussfilters erstrecken sich nicht über die gesamte Länge des Wandflussfilters. Die Beschichtungen Y und/oder Z (soweit vorhanden) befinden sich bevorzugt ausgehend vom jeweiligen Ende des Wandflussfilters auf einer Länge von bis zu 90 % der Länge L. Die minimale Länge der Beschichtungen Y und Z - soweit vorhanden - beträgt mindestens 1,25 cm, vorzugsweise mindestens 2,0 cm und ganz bevorzugt mindestens 2,5 cm vom jeweiligen Ende des Filters gerechnet. Die Beschichtungen Y und Z - soweit vorhanden - befinden sich jedoch jeweils auf den Oberflächen O_{E} und/oder O_{A}. Diese so genannten Aufwandbeschichtungen betragen vom jeweiligen Ende des Wandflussfilters gerechnet bevorzugt 10 bis 90 % der Länge L des Wandflussfilters, vorzugsweise 30 bis 80 % und besonders bevorzugt 60 bis 80%. Unter Aufwandbeschichtung ist gemeint, dass diese Beschichtungen sich über die Oberflächen O_{E} bzw. O_{A} in den Kanal E bzw. A des Wandflussfilters erheben, den Kanalquerschnitt mithin erniedrigen. Nur untergeordnet werden die oberflächlich liegenden Poren der Oberflächen O_{E} bzw. O_{A} mit dem katalytisch aktiven Material gefüllt. Mehr als 80 %, bevorzugt mehr als 90 % des katalytisch aktiven Materials befindet sich nicht in der porösen Wand der Kanäle E bzw. A.

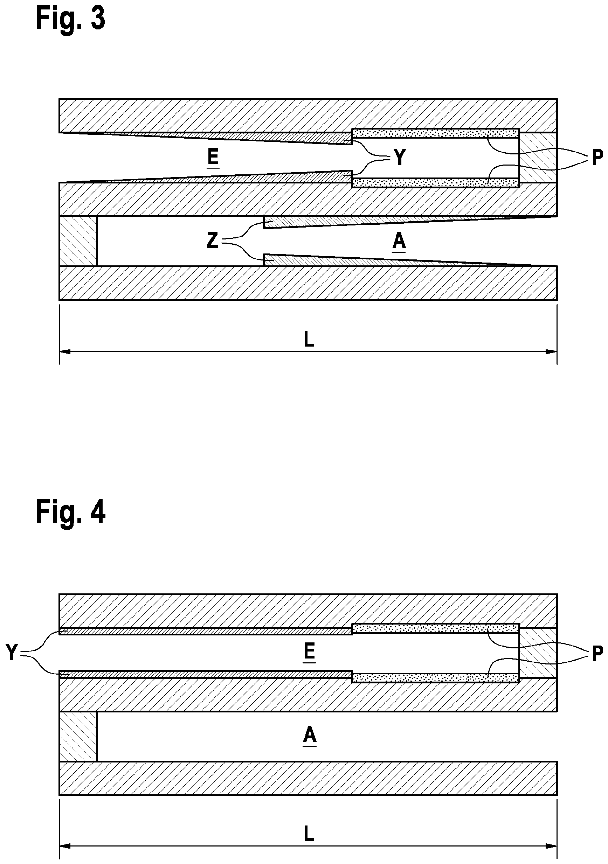

In einer weiter bevorzugten Ausführungsform weisen die Beschichtung Y und/oder Z (soweit vorhanden) einen Dickegradienten über die Länge L dergestalt auf, dass an den jeweiligen Enden des Wandflussfilters die geringste Dicke der Beschichtung Y und/oder Z vorherrscht. Die Dicke wächst mithin entlang der Länge L des Wandflussfilters (siehe Fig. 3) Dabei kann es sein, dass diese Beschichtungen vorzugsweise mehr als 2-mal, mehr bevorzugt bis zu mehr als 3-mal die Dicke an einem Beschichtungsende aufweisen wie am anderen Beschichtungsende. Die Dicke ist dabei die Höhe, mit der sich die Beschichtung Y und/oder Z über die Oberfläche O_{E} bzw. O_{A} erhebt. Durch den Dickegradienten der Beschichtung auf den Kanalwänden erreicht man zudem, dass sich die Filtrationseffizienz über die gesamte Länge L des Filters angleicht. Eine gleichmäßigere Abscheidung des Rußes über die gesamte Filterwand und damit ein verbesserter Abgasgegendruckanstieg und ggf. ein besserer Abbrand des Rußes sind das Resultat.

Neben den katalytisch aktiven Beschichtungen Y und Z kann der erfindungsgemäße Wandflussfilter eine weitere Beschichtung X aufweisen, die sich in dessen Wänden befindet, und sich ausgehend vom ersten oder zweiten Ende des Wandflussfilters auf einer Länge von bis zu 100 % der Länge L erstreckt. Das Minimum dieser Inwandbeschichtung beträgt mindestens 1,25 cm, vorzugsweise mindestens 2,0 cm und ganz bevorzugt mindestens 2,5 cm vom jeweiligen Ende des Filters gerechnet. Vorzugsweise erstreckt sich die Beschichtung X über bis zu 80 % der Länge L.

Der Wandflussfilter, welcher erfindungsgemäß mit dem Pulvergasaerosol beaufschlagt wird, trägt demgemäß eine katalytische Aktivität (hier mit X, Y und Z bezeichnet) bereits in sich. Unter katalytischer Aktivität wird vorliegend die Fähigkeit verstanden, schädlich Bestandteile des Abgases von Verbrennungsmotoren in weniger schädliche zu verwandeln. Insbesondere sind hier die Abgasbestandteile NOx, CO und HC oder der Partikelabbrand zu nennen. Diese katalytische Aktivität wird nach Maßgabe des Fachmanns durch eine Beschichtung des Wandflussfilters in dessen Wände und/oder auf dessen Wände mit einem katalytisch aktiven Material bereitgestellt. Unter dem Begriff des Beschichtens wird demgemäß das Aufbringen von katalytisch aktiven Materialien auf einen Wandflussfilter verstanden. Die Beschichtung übernimmt die eigentliche katalytische Funktion. Vorliegend erfolgt die Beschichtung durch das Aufbringen einer entsprechend wenig viskosen wässrigen Suspension der katalytisch aktiven Komponenten - auch Washcoat genannt - in oder auf die Wand des Wandflussfilters, z. B. gemäß EP1789190B1. Nach dem Aufbringen der Suspension wird der Wandflussfilter getrocknet und gegebenenfalls bei erhöhter Temperatur kalziniert. Der katalytisch beschichtete Filter besitzt vorzugsweise eine Beladung von 20 g/l bis 200 g/l, vorzugsweise 30 g/l bis 150 g/l. Die geeignetste Beladungsmenge eines in der Wand beschichteten Filters hängt von seiner Zelldichte, seiner Wandstärke und der Porosität ab.

Im Prinzip sind alle dem Fachmann für den Autoabgasbereich bekannten Beschichtungen sowie Kombination derer für die vorliegende Erfindung geeignet. Die katalytische Beschichtung des Filters kann bevorzugt aus der Gruppe bestehend aus Dreiwegkatalysator, SCR-Katalysator, Stickoxidspeicherkatalysator, Oxidationskatalysator, Rußabbrandbeschichtung ausgewählt werden. Hinsichtlich der einzelnen in Frage kommenden katalytischen Funktionen und deren Erklärung wird auf die Ausführungen in der WO2011151711A1 verwiesen.

Besonders bevorzugt sind Beschichtungen (für X, Y und/oder Z), die eine Dreiwegefunktionalität besitzen und insbesondere bei Betriebstemperaturen von 250 bis 1100 °C aktiv sind. Sie enthalten üblicherweise ein oder mehrere Edelmetalle, die auf einem oder mehreren Trägermaterialien fixiert sind, sowie ein oder mehrere Sauerstoffspeicherkomponenten. Als Edelmetalle kommen insbesondere Platin, Palladium und Rhodium in Frage, wobei Palladium, Rhodium oder Palladium und Rhodium bevorzugt und Palladium und Rhodium besonders bevorzugt sind. Bezogen auf das erfindungsgemäße Partikelfilter ist der Anteil von Rhodium am gesamten Edelmetallgehalt insbesondere größer oder gleich 10 Gew.-%. Die Edelmetalle werden üblicherweise in Mengen von 0,15 bis 5 g/l, bezogen auf das Volumen des Wandflussfilters eingesetzt.

Als Trägermaterialien für die Edelmetalle kommen alle dem Fachmann für diesen Zweck geläufigen Materialien in Betracht. Solche Materialien sind insbesondere Metalloxide mit einer BET-Oberfläche von 30 bis 250 m²/g, bevorzugt von 100 bis 200 m²/g (bestimmt nach DIN 66132 - neueste Fassung am Anmeldetag). Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird. Ein weiteres geeignetes Trägermaterial ist Lanthan-stabilisiertes Aluminiumoxid, dessen Oberfläche mit Lanthanoxid, mit Bariumoxid oder mit Strontiumoxid beschichtet ist.

Als Sauerstoffspeicherkomponente kommen insbesondere Cer/Zirkonium/Seltenerdmetall-Mischoxide in Frage. Der Begriff "Cer/Zirkonium/Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid (feste Lösung). Je nach Herstellungsverfahren können aber auch nicht vollständig homogene Produkte entstehen, die in der Regel ohne Nachteil verwendet werden können. Im Übrigen umfasst der Begriff Seltenerdmetall bzw. Seltenerdmetalloxid im Sinne vorliegender Erfindung kein Cer bzw. kein Ceroxid. Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht. Bevorzugt sind Lanthanoxid, Yttriumoxid und/oder Praseodymoxid. Besonders bevorzugt sind Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid. In Ausführungsformen der vorliegenden Erfindung sind die Sauerstoffspeicherkomponenten frei von Neodymoxid. Erfindungsgemäß kann das Masseverhältnis von Ceroxid zu Zirkoniumoxid in den Cer/Zirkonium/Seltenerdmetall-Mischoxiden in weiten Grenzen variieren. Es beträgt beispielsweise 0,1 bis 1,5, bevorzugt 0,2 bis 1 oder 0,3 bis 0,5.

Sofern die Cer/Zirkonium/Seltenerdmetall-Mischoxide als Seltenerdmetall Yttriumoxid enthalten, so ist dessen Anteil insbesondere 5 bis 15 Gew.-% bezogen auf das Sauerstoffspeichermaterial. Sofern die Cer/Zirkonium/Seltenerdmetall-Mischoxide als Seltenerdmetall Praseodymoxid enthalten, so ist dessen Anteil insbesondere 2 bis 10 Gew.-% bezogen auf das Sauerstoffspeichermaterial. Sofern die Cer/Zirkonium/Seltenerdmetall-Mischoxide als Seltenerdmetall Lanthanoxid und Yttriumoxid enthalten, so ist dessen Massenverhältnis insbesondere 0,1 bis 1. Sofern die Cer/Zirkonium/Seltenerdmetall-Mischoxide als Seltenerdmetall Lanthanoxid und Praseodymoxid enthalten, so ist dessen Massenverhältnis insbesondere 0,1 bis 1. Üblicherweise enthalten die Beschichtungen Y, Y' und Z Sauerstoffspeicherkomponenten in Mengen von 15 bis 120 g/l, bezogen auf das Volumen des Wandflussfilters. Das Masseverhältnis von Trägermaterialien und Sauerstoffspeicher-komponenten in den Beschichtungen X, Y und Z (soweit vorhanden) beträgt üblicherweise 0,3 bis 1,5, beispielsweise 0,4 bis 1,3.

In Ausführungsformen der vorliegenden Erfindung umfassen die Beschichtungen X und Y sowie Z (soweit vorhanden) Lanthan-stabilisiertes Aluminiumoxid, Rhodium, Palladium oder Palladium und Rhodium und eine Zirkoniumoxid, Ceroxid, Yttriumoxid und Lanthanoxid aufweisende Sauerstoffspeicherkomponente. In anderen Ausführungsformen der vorliegenden Erfindung umfassen die Beschichtungen X und Y sowie Z (soweit vorhanden) Lanthan-stabilisiertes Aluminiumoxid, Rhodium, Palladium oder Palladium und Rhodium und eine Zirkoniumoxid, Ceroxid, Praseodymoxid und Lanthanoxid umfassende Sauerstoffspeicherkomponente.

In Ausführungsformen der vorliegenden Erfindung beträgt die Summe der Längen von Beschichtung Y und Beschichtung Z - soweit vorhanden - vorzugsweise 110 bis 160 % der Länge L. In einer anderen bevorzugten Ausführungsform beträgt die Summe der Längen von Beschichtung X und Beschichtung Z - soweit vorhanden - vorzugsweise 90 bis 50% der Länge L. In Ausführungsformen der vorliegenden Erfindung enthalten die Beschichtungen X, Y und Z keinen Zeolithen und kein Molsieb.

Die Zusammensetzung der jeweiligen Beschichtung sowie derer Beschichtungsart (in oder auf der Wand), sowie die Menge der aufgebrachten katalytischen Beschichtungen kann hinsichtlich der gewünschten katalytischen Aktivität variiert und kombiniert werden. Durch die oben beschriebene Variation der katalytisch aktiven Beschichtung werden im Filter unterschiedliche Wandpermeabilitäten geschaffen. Zusätzlich weisen produktionsbedingt die katalytischen Schichten auf den Filterwänden manchmal Inhomogeniäten, kleine Risse, unterschiedliche Schichtdicken sowie teilweise auch unbeschichtete Fehlstellen auf und zeigen zwar eine hohe katalytische Aktivität und einen akzeptablen Gegendruck auf, haben aber eine relativ niedrige Frischfiltrationseffizienz. Auch die Bereiche, die nur eine In-Wand-Beschichtung X oder keine katalytische Beschichtung aufweisen, weisen ggf. eine geringere Filtrationseffizienz auf. All dies führt dazu, dass die Kanalwände unterschiedlich gut gasdurchlässig sind und Bereiche mit unterschiedlicher Gaspermeabilität aufweisen können.

Das Beaufschlagen des hier betrachteten Wandflussfilters mit dem trockenen Pulvergasaerosol führt also dazu, dass sich die Pulverteilchen dem Strom des Gases folgend auf der Oberfläche der Eingangsseite des Filters und ggf. in den Poren des Filters abscheiden. Dabei führt die zuvor erwähnte unterschiedliche Wandpermeabilität des Filters (z.B. bedingt durch Inhomogenitäten der Filterwand selbst oder unterschiedliche Beschichtungszonen) zu einer selektiven Abscheidung des Pulvers auf der Filterwand oder in den Poren der Wand dort, wo die Strömung am größten ist. Dieser Effekt führt auch dazu, dass zum Beispiel Risse oder Poren in der Washcoatschicht aufgrund von Beschichtungsfehlern durch das poröse Pulver so aufgefüllt werden, dass späterhin die Rußpartikel im Abgas beim Durchgang des Abgases durch den Filter vermehrt zurückgehalten werden. Eine bessere Filtrationseffizienz ist mithin die Folge.

Erfindungsgemäß wird demnach der zoniert beschichtete, trockene Abgasfilter in Abgasströmungsrichtung mit einem Pulver derart belegt, dass die am stärksten durchströmten Zellwandbereiche mitlockeren in sich porösen Pulveranhäufungen in den Poren und/oder auch auf der Wand belegt werden um eine gewünschte erhöhte Filtrationseffizienz zu erhalten. Dabei führt die Bildung der in sich porösen Pulveranhäufungen überraschenderweise zu einer relativ niedrigen Staudruckerhöhung. In einer bevorzugten Ausführungsform wird der Wandflussfilter so mit einem Pulvergasaerosol beaufschlagt, dass sich das Pulver bei der Beaufschlagung auf den Kanalwänden der Eingangsseite abscheidet und hier eine zusammenhängende Schicht aufbaut. In einer weiterhin ganz bevorzugten Ausführungsform wird der Wandflussfilter so mit einem Pulvergasaerosol beaufschlagt, dass sich das Pulver bei der Beaufschlagung in den Poren der Filterwände niederschlägt und diese bis zur Eingangsoberfläche auffüllt und dabei keine zusammenhängende Schicht auf den Wänden des Filters ausbildet.

Die Menge des verwendeten Pulvers hängt von der Art des Pulvers, Art der Beschichtung (siehe eben) und ggf. dem Volumen der zur Verfügung stehenden Poren ab und kann unter den gegebenen Randbedingungen (nicht zu hoher Abgasgegendruck) vom Fachmann in vorläufigen Versuchen bestimmt werden. In der Regel liegt die Beladung des Filters mit dem Pulver bei nicht mehr als 50 g/l bezogen auf das Filtervolumen. Bevorzugt beträgt der Wert nicht mehr als 20 g/l, ganz besonders bevorzugt nicht mehr als 10 g/l. Eine untere Grenze bildet naturgemäß die angestrebte Erhöhung der Filtrationseffizienz. Die genaue Menge an benötigtem Pulver zur Steigerung der Filtrationseffizienz wird in Abhängigkeit der Länge und der Art der katalytischen Beschichtung bestimmt. Sofern nur eine Pulverbeschichtung in den Oberflächenporen des Filters angestrebt wird, reicht eine Menge unter den genannten Voraussetzungen vorteilhaft eine Menge an Pulver von bis zu 10 g/l, bevorzugt bis zu 5 g/l aus.

Pulver, welche bevorzugt in der vorliegenden Erfindung zur Erzeugung des Aerosols herangezogen werden, sind dem Fachmann hinlänglich bekannt. In der Regel sind dies hochschmelzende Metallverbindungen, die gemeinhin als Trägermaterialien für Katalysatoren im Autoabgasbereich herangezogen werden. Bevorzugt werden entsprechende Metalloxid-, Metallsulfat-, Metallphosphat-, Metallcarbonat- oder Metallhydroxidpulver oder deren Mischungen eingesetzt. Die für die Metallverbindungen infrage kommenden Metalle sind insbesondere solche ausgewählt aus der Gruppe der Alkali-, Erdalkali- bzw. Erdmetalle oder Übergangsmetalle. Bevorzugt werden solche Metalle ausgewählt aus der Gruppe Calcium, Magnesium, Strontium, Barium, Aluminium, Silizium, Titan, Zirkon, Cer eingesetzt. Diese Metalle können vorzugsweise wie gesagt als Oxide eingesetzt werden. Ganz besonders bevorzugt ist der Einsatz von Ceroxid, Titandioxid, Zirkondioxid, Siliziumdioxid, Aluminiumoxid, Eisenoxid, Zinkoxid oder Mischungen oder Mischoxiden derselben. Ganz besonders bevorzugt ist der Einsatz von einem Aerosol, welches ein Gemisch aus Luft und einem dieser Metalloxidpulver darstellt. Unter dem Begriff Mischoxid (feste Lösungen von einem Metalloxid in mindestens einem anderen) wird vorliegend auch der Einsatz von Zeolithen und Zeotypen verstanden. Im Rahmen der Erfindung sind Zeolithe und Zeotype definiert wie in der WO2015049110A1. Neben den üblicherweise chemisch gefällten Metalloxiden können auch sogenannte pyrogene Metalloxidpulver verwendet werden. Allgemein versteht man unter pyrogen hergestellten Metalloxidpulvern solche, die durch eine Flammenhydrolyse oder Flammenoxidation aus einem Metalloxidprecursor in einer Knallgasflamme erhalten werden (https://de.wikipedia.org/w/index.php?title=Pyrogenes Siliciumdioxid&oldid=182147815; Pater Albers et al. Chemie in unserer Zeit, 2016, 50, 162 - 171; Hans Ferkel et al. MTZ - Motortechnische Zeitschrift, 2010, 71, 128 - 133). Diese weisen Eigenschaften auf, wie sie für flammensynthetisierte partikuläre Produkte in folgenden Literaturstellen beschrieben werden, Gutsch A. et al. (2002) KONA (No. 20); Li S. et al. (2016) Progress in Energy and Combustion Science (55); Ulrich G. (1971) Combsution Science and Technology (Vol. 4). Pyrogene Metalloxide zeichnen sich in der Regel durch eine hohe spezifische Oberfläche und eine geringe Schüttdichte aus. Ganz allgemein lassen sich mittels dieses Verfahrens hochoberflächige Oxide verschiedener Metalle herstellen. Vorteilhaft sind diese Oxide hergestellt aus der Gruppe der Metalle bestehend aus Silizium, Aluminium, Titan, Zirkon, Cer oder aus Mischungen dieser Metalle.

Damit das Pulver des Pulvergasaerosols sich ausreichend gut z.B. in den Poren des katalytisch beschichteten Wandflussfilters abscheiden kann bzw. auf der Filterwand haften kann, sollte der Partikeldurchmesser im Aerosol zumindest kleiner sein als die Poren des Wandflussfilters. Dies kann ausgedrückt werden dadurch, dass das Verhältnis von mittlerem Partikeldurchmesser (Q₃-Verteilung; gemessen gemäß neuester ISO 13320 am Anmeldetag) d50 im trockenen Aerosol und dem mittleren Porendurchmesser des Wandflussfilters nach Beschichtung (gemessen nach DIN 66134 - neueste Fassung am Anmeldetag) zwischen 0,03 - 2, vorzugsweise zwischen 0,05 - 1,43 und ganz besonders bevorzugt zwischen 0,05 - 0,63 liegt. Hierdurch wird erreicht, dass sich die Partikel des Pulvers im Aerosol dem Gasstrom folgend in den Poren der Wände des Wandflussfilters niederschlagen können.

Die Pulver sollten vorteilhafterweise ohne vorherige oder nachträgliche Behandlung auf dem Träger fixiert sein. Für ein geeignetes Pulver zur Herstellung der erfindungsgemä-ßen Filter ist eine Optimierung zwischen möglichst großer Oberfläche der verwendeten Pulver, der Vernetzung und der Haftfestigkeit von Vorteil. Während des Betriebs im Fahrzeug folgen kleine Partikel aufgrund ihrer niedrigen Partikelrelaxationszeit annähernd trägheitslos den Stromlinien. Dieser gleichmäßigen, konvektionsgetriebenen Bewegung wird eine zufällige "Zitterbewegung" überlagert. Dieser Theorie folgend ergibt sich für eine gute Filtrationswirkung eines mit Pulver beaufschlagten Filters, dass dieses eine möglichst große umströmte Oberflächen anbieten sollte. Das Pulver sollte somit einen hohen Feinanteil aufweisen, da bei gleichem Gesamtvolumen des Oxids kleine Partikel deutlich größere Oberflächen anbieten. Gleichzeitig darf der Druckverlust aber nur unwesentlich steigen. Dies erfordert eine lockere Vernetzung der Pulver. Für eine filtrationseffizienzsteigernde Beschichtung können vorzugsweise Pulver mit einer Stampfdichte zwischen 50 g/l und 900 g/l verwendet werden, vorzugsweise zwischen 200 g/l und 850 g/l und ganz bevorzugt zwischen 400 g/l und 800 g/l.

Die Pulver können erfindungsgemäß wie oben beschrieben als solches eingesetzt werden. Ebenfalls vorstellbar ist jedoch der Einsatz von trockenem Pulver, welches eine katalytische Aktivität im Hinblick auf die Abgasnachbehandlung trägt. Demzufolge kann das Pulver selbst ebenfalls hinsichtlich der Verminderung der Schadstoffe im Abgas eines Verbrennungsmotors katalytisch aktiv sein. Hierfür kommen alle dem Fachmann bekannten Aktivitäten in Betracht, wie z.B. TWC-, DOC-, SCR-, LNT- oder den Rußabbrand beschleunigende Katalysatoren. Gemeinhin wird das Pulver die gleiche katalytische Aktivität aufweisen, wie eine ggf. erfolgte katalytische Beschichtung des Filters. Hierdurch wird die katalytische Gesamtaktivität des Filters gegenüber nicht mit katalytisch aktivem Pulver beschichteten Filtern nochmals gesteigert. Insofern kann es sein, dass zum Beispiel Aluminiumoxid mit einem Edelmetall imprägniert für die Herstellung des Pulvergasaerosols herangezogen wird. Es ist außerdem möglich zwei oder mehr Pulver unterschiedlicher Zusammensetzung und Funktionalität in zwei oder mehr aufeinanderfolgenden Beschichtungsschritten als trockenes Pulvergasaerosol aufzutragen.

In diesem Zusammenhang ist eine Dreiwege-Aktivität des Pulvers, das als Aerosol aufgebracht wird, mit einer Aktivierung, die Palladium und Rhodium sowie ein Sauerstoffspeichermaterial wie Cer-Zirkonoxid beinhaltet, bevorzugt. Ebenfalls vorstellbar ist, dass für die SCR-Reaktion katalytisch aktives Material eingesetzt wird. Dabei kann das Pulver zum Beispiel aus mit Übergangsmetallionen ausgetauschten Zeolithen oder Zeotypen bestehen. Ganz besonders bevorzugt ist der Einsatz von Eisen und/oder Kupfer ausgetauschten Zeolithen, äußerst bevorzugt wird als Material zur Herstellung des Pulvergasaerosols CuCHA (Kupfer ausgetauschtes Chabasit; http://europe.iza-struc-ture.orq/IZA-SC/framework.php?STC=CHA) oder CuAEI (http://europe.iza-struc-ture.org/IZA-SC/framework.php?STC=AEI) verwendet.

Weiterhin vorteilhaft ist ein Pulver, dessen katalytische Aktivität zu einer verbesserten Rußverbrennung führt. Bevorzugt ist ein Pulver, bestehend aus einem Aluminiumoxid, welches mit einem oder mehreren Edelmetallen imprägniert ist. Bevorzugte Edelmetalle sind in diesem Fall, Platin, Palladium, Rhodium oder Mischungen derselben. Besonders bevorzugt ist ein mit Platin und Palladium imprägniertes Aluminiumoxid. Weitere den Rußabbrand katalysierende Materialien sind reine oder dotierte Ceroxide und/oder Cer-Zirkonmischoxide. Dem Fachmann bekannte dotierende Elemente sind solche aus der Gruppe der seltenen Erdmetalle wie z.B. Lanthan, Yttrium, Neodym, Praseodym. Weitere bekannte, den Rußabbrand katalysierende Elemente stammen aus der Gruppe der Alkali-, Erdalkali und der Übergangsmetalle wie z.B. Magnesium, Kalzium, Eisen, Kupfer, Mangan. Diese können entweder direkt in Pulverform z.B. als Sulfat, Carbonat, Oxid oder analogen Verbindungen, oder als Verbund in Verbindung mit Aluminiumoxid, Ceroxid und/oder Cer/Zirkonmischoxid auf den Filter aufgebracht werden.

Besonders hervorzuheben ist, dass die hier beschriebenen mit Pulver beaufschlagten Filter sich von denen, die im Abgasstrang eines Fahrzeugs durch Ascheablagerung während des Betriebs entstehen, unterscheiden. Erfindungsgemäß werden die Filter gezielt mit verschiedenen bestimmten, trockenen Pulver versetzt. Dies führt dazu, dass die Balance zwischen Filtrationseffizienz, katalytischen Aktivität und Abgasgegendruck von Anfang an gezielt auf den Einsatzzweck (Dieselruß, Ottomotorruß) eingestellt werden kann.

Ebenfalls Gegenstand der vorliegenden Erfindung ist ein Verfahren zur Herstellung eines erfindungsgemäßen Wandflussfilters. Im Prinzip weiß der Fachmann, wie er ein Aerosol aus einem Pulver und einem Gas herzustellen hat, um dieses dann durch den mit dem Pulver zu beaufschlagenden Filter zu leiten. Erfindungsgemäß wird zur Herstellung eines Wandflussfilters zur Verminderung der Schadstoffe im Abgas eines Verbrennungsmotors, ein trockener, mit einer katalytisch aktiven Beschichtung versehener Filter, der Bereiche unterschiedlicher Permeabilität aufweist, eingangsseitig mit Pulvergasaerosolen beaufschlagt. Die Beaufschlagung des Filters mit dem Pulvergasaerosol erfolgt durch die Dispergierung des Pulvers in einem Gas, welches dann einem Gasstrom zugeführt wird und anschließend eingangsseitig durch den Filter gesaugt wird.

Das Aerosol aus dem Gas und dem Pulver kann nach Maßgabe des Fachmannes oder wie weiter hinten dargestellt hergestellt werden. Hierzu wird gemeinhin ein Pulver mit einem Gas vermischt (http://www.tsi.com/Aerosolgeneratoren-und-dispergierer/; https://www.palas.de/de/product/aerosolgeneratorssolidparticles). Dieses so hergestellte Gemisch aus dem Gas und dem Pulver wird dann vorteilhafter Weise über einen Gasstrom in die Einlassseite des Wandflussfilters geführt. Unter Einlassseite wird der durch die Anströmkanäle/Eingangskanäle gebildete Teil des Filters verstanden. Die Eingangsoberfläche wird durch die Wandoberflächen der Anströmkanäle/Eingangskanäle auf der Eingangsseite des Wandflussfilters gebildet. Für die Auslassseite gilt entsprechendes.

Als Gase zur Herstellung des Aerosols und zum Eintragen in den Filter können alle dem Fachmann für den vorliegenden Zweck infrage kommende Gase herangezogen werden. Ganz besonders bevorzugt ist der Einsatz von Luft. Es können jedoch auch andere Reaktionsgase herangezogen werden, die entweder eine oxidierende (z.B. O₂, NO₂) oder eine reduzierende (z.B. H₂) Aktivität gegenüber dem eingesetzten Pulver entwickeln können. Ebenfalls kann sich bei bestimmten Pulvern der Einsatz von Inertgasen (z.B. N₂) oder Edelgasen (z.B. He) als vorteilhaft erweisen. Auch Mischungen der aufgezählten Gase sind vorstellbar.

Um das Pulver ausreichend tief in den Einlassbereich E und gut haftend abscheiden zu können, ist eine gewisse Saugleistung von Nöten. Der Fachmann kann sich hier in orientierenden Versuchen für den jeweiligen Filter und das jeweilige Pulver selbst ein Bild machen. Es hat sich herausgestellt, dass das Aerosol (Pulver-Gas-Gemisch) vorzugsweise mit einer Geschwindigkeit von 5 m/s bis 60 m/s, mehr bevorzugt 10 m/s bis 50 m/s und ganz besonders bevorzugt 15 m/s bis 40 m/s durch den Filter gesaugt wird. Hierdurch wird ebenfalls eine vorteilhafte Adhäsion des applizierten Pulvers erreicht.

Die Dispergierung des Pulvers in dem Gas zur Etablierung eines Pulvergasaerosols erfolgt dabei auf verschiedene Arten. Vorzugsweise wird die Dispergierung des Pulvers durch mindestens eine oder eine Kombination der folgenden Maßnahmen generiert: Druckluft, Ultraschal, Sieben, "in-situ-Mahlen", Gebläse, Expansion von Gasen, Wirbelbett. Weitere, hier nicht genannte Dispergiermethoden können vom Fachmann ebenfalls herangezogen werden. Im Prinzip ist der Fachmann frei darin, eine Methode zur Herstellung des Pulvergasaerosols zu wählen. Wie eben beschrieben wird das Pulver zuerst durch eine Dispergierung in ein Pulvergasaerosol umgewandelt und anschließend in einen Gasstrom geleitet.

Dieses so hergestellte Gemisch aus dem Gas und dem Pulver wird erst anschließend in einen bestehenden Gasstrom eingeleitet, welcher das fein verteilte Pulver in die Einlassseite E des Wandflussfilters trägt. Dieser Prozess wird bevorzugt durch eine Saugvorrichtung, welche in der vom Filter abstromseitig befindlichen Rohrleitung positioniert ist, unterstützt. Dies steht im Gegensatz zur in der Fig. 3 der US8277880B gezeigten Vorrichtung, bei der das Pulvergasaerosol direkt im Gasstrom erzeugt wird. Das erfindungsgemäße Verfahren erlaubt eine viel gleichmäßigere und gute Durchmischung des Gasstroms mit dem Pulvergasaerosol, was letztlich für eine vorteilhafte Verteilung der Pulverteilchen im Filter in radialer wie axialer Richtung sorgt und damit die Abscheidung der Pulverteilchen auf der Eingangsoberfläche des Filters vereinheitlichen und steuern hilft. Das Pulver ist bei der Beaufschlagung des Wandflussfilters im Sinne der Erfindung trocken. Vorzugsweise wird das Pulver mit Umgebungsluft vermischt auf den Filter aufgebracht. Durch die Vermischung des Pulvergasaerosols mit partikelfreiem Gas, vorzugsweise trockene Umgebungsluft, wird die Konzentration der Partikel auf ein solches Maß herabgesetzt, dass bis zur Abscheidung im Wandlfussfilter keine nennenswerte Agglomeration stattfindet. Dadurch wird die bei der Dispergierung eingestellte Partikelgröße im Aerosol konserviert.

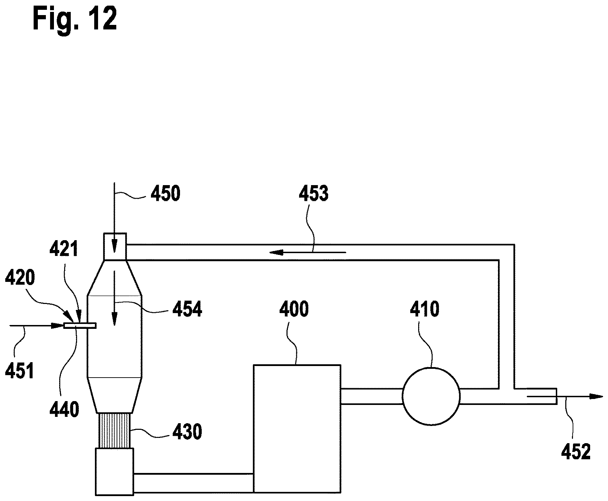

Eine bevorzugte Vorrichtung zur Herstellung eines erfindungsgemäßen Wandflussfilters ist in Fig. 12 schematisch dargestellt. Eine derartige Vorrichtung zeichnet sich dadurch aus, dass
- mindestens eine Einheit zur Dispergierung von Pulver in einem Gas;
- eine Einheit zur Vermischung der Dispersion mit einem bestehenden Gasstrom;
- zumindest zwei Einheiten zur Aufnahme eines Filters, die dergestalt ausgebildet sind, dass der Gasstrom durch den Filter fließt, ohne dass eine weitere Zufuhr eines Gases erfolgt;
- eine Einheit zur Erzeugung eines Soges, welche den Gasstrom durch den Filter aufrechterhält;
- optional eine Einheit zur Erzeugung von Wirbeln vor dem Filter, so dass eine Ablagerung von Pulver auf den Eingangsstopfen des Filters möglichst unterbleibt; und
- optional eine Einheit, durch die zumindest ein Teilgasstrom abstromseitig von der Saugvorrichtung entnommen wird und vor der Pulverzugabe dem Gasstrom, welcher durch den Filter gesaugt wird, zugegeben wird; vorhanden sind.

In dieser bevorzugten Ausführungsform des erfindungsgemäßen Verfahrens - wie in der Skizze Fig. 12 - dargestellt wird zumindest ein Teilgasstrom abstromseitig von der Saugvorrichtung entnommen und vor der Pulverzugabe dem Gasstrom, welcher durch den Filter gesaugt wird, wieder zugegeben. Dadurch wird das Pulver in einen schon erwärmten Luftstrom zudosiert. Die Sauggebläse für die nötigen Drücke erzeugen ca. 70°C Ablufttemperatur, da die installierte Saugleistung bevorzugt >20KW ist. Energetisch optimiert wird die Abwärme des Sauggebläses zum Aufheizen der Zuluft genutzt, um die relative Feuchte der Zuluft zu vermindern. Dies wiederum reduziert die Haftung der Partikel untereinander und an den Eingangsstopfen. Der Ablagerungsprozess des Pulvers kann damit besser gesteuert werden.

In dem vorliegenden Verfahren zur Herstellung eines Wandflussfilters wird ein Gasstrom mit einem Pulvergasaerosol beaufschlagt und dieser in einen Filter eingesaugt. Dadurch wird erreicht, dass das Pulver sich in dem Gasstrom ausreichend gut verteilen kann, um auf der Einlassseite des Wandflussfilters in die Einlasskanäle des Filters eindringen zu können. Die homogene Verteilung des Pulvers in dem Gas/der Luft erfordert eine intensive Durchmischung. Dafür sind dem Fachmann beispielsweise Diffusoren, Venturimischer und statische Mischer bekannt. Besonders geeignet für den Pulverbeschichtungsprozess sind Mischeinrichtungen, die Pulverablagerungen auf den Oberflächen der Beschichtungsanlage vermeiden. Damit kommen für diesen Prozess Diffusoren und Venturirohre bevorzugt zum Einsatz. Bewährt hat sich auch der Eintrag des dispergierten Pulvers in eine schnelldrehende rotierende Strömung mit einer hohen Turbulenz.

Zur Erreichung einer vorteilhaften Weise gleichmäßigen Verteilung des Pulvers über den Querschnitt des Filters sollte das das Pulver transportierende Gas eine Kolbenströmung (möglichst gleiche Geschwindigkeit über den Querschnitt) beim Auftreffen auf den Filter aufweisen. Dies wird bevorzugt durch eine beschleunigte Strömung vor dem Filter eingestellt. Wie dem Fachmann bekannt ist, bewirkt eine stetige Verkleinerung des Querschnitts ohne abrupte Veränderungen eine solche beschleunigte Strömung, beschrieben durch die Kontinuitätsgleichung. Des Weiteren ist dem Fachmann dann auch bekannt, dass sich damit das Strömungsprofil stärker einem Kolbenprofil annähert. Zur gezielten Veränderung der Strömung können Einbauten wie z.B. Siebe, Ringe, Scheiben, etc. unterhalb und/oder oberhalb des Filters eingesetzt werden.

In einer weiterhin vorteilhaften Ausgestaltung des vorliegenden Verfahrens besitzt die Apparatur zur Pulverbeschichtung eine oder mehrere Vorrichtungen (Turbulatoren, Vortexgeneratoren), mit denen der das Pulvergasaerosol tragende Gasstrom vor dem Auftreffen auf den Filter verwirbelt werden kann. Als Beispiel hierfür können entsprechende Siebe oder Gitter dienen, die in einer ausreichenden Entfernung anströmseitig zum Filter platziert werden. Die Entfernung sollte nicht zu groß oder klein sein, so dass eine ausreichende Verwirbelung des Gasstroms direkt vor dem Filter erreicht wird. Der Fachmann kann die Entfernung in einfachen Versuchen ermitteln. Der Vorteil dieser Maßnahme liegt darin begründet, dass sich keine Pulverbestandteile auf den Eingangsstopfen der Auslasskanäle abscheiden und alles Pulver in die Eingangskanäle eindringen kann. Demzufolge ist erfindungsgemäß bevorzugt, wenn das Pulver vor dem Einströmen in den Filter dergestalt verwirbelt wird, dass Ablagerungen von Pulver auf den Einganstopfenstopfen des Wandflussfilters möglichst vermieden werden. Ein Turbulator oder Turbulenz- oder Vortexgenerator bezeichnet in der Aerodynamik Gerätschaften, die eine künstliche Störung der Strömung verursachen. Wie dem Fachmann bekannt, bilden sich hinter Stäben, Gittern und anderen die Strömung störenden Einbauten bei entsprechenden Re-Zahlen Wirbel (insbesondere Mikrowirbel). Bekannt ist die Karmansche Wirbelstraße (H. Benard, C. R. Acad. Sci. Paris Ser. IV 147, 839 (1908); 147, 970 (1908); T. von Karman, Nachr. Ges. Wiss. Göttingen, Math. Phys. Kl. 509 (1911); 547 (1912)) und die Wirbelschleppe hinter Flugzeugen, die Dächer abdecken kann. Dieser Effekt kann in dem erfindungsgemäßen Fall ganz besonders vorteilhaft durch vibrierende selbstabreinigende Siebe (sogenannte Ultraschallsiebe), die sich vorteilhafterweise in der Strömung bewegen, noch verstärkt werden. Eine andere Methode ist die Störung der Strömung durch Schallfelder, die durch die Druckamplituden die Strömung zu Turbulenzen anregt. Diese Schallfelder können sogar die Oberfläche des Filters ohne Strömung reinigen. Die Frequenzen können von Ultraschall bis zum Infraschall reichen. Letztere Maßnahmen werden auch zur Rohreinigung in großtechnischen Anlagen eingesetzt.

Die bevorzugten Ausführungsformen für den Wandflussfilter gelten mutatis mutandis auch für das Verfahren. Es wird diesbezüglich explizit auf das oben zum Wandflussfilter Gesagte verwiesen.

Ebenfalls Gegenstand der vorliegenden Erfindung ist die Verwendung eines erfindungsgemäßen Wandflussfilters zur Minderung schädlicher Abgase eines Verbrennungsmotors. Als Einsatzzwecke können im Prinzip alle dem Fachmann hierfür in Frage kommenden katalytischen Abgasnachbehandlungen (siehe vorne) mit einem Filter dienen, insbesondere jedoch solche bei denen der Filter in einem Abgassystem zusammen mit einem oder mehreren katalytisch aktiven Aggregaten ausgewählt aus der Gruppe bestehend aus Stickoxidspeicherkatalysator, SCR-Katalysator, Dreiwegkatalysator und Dieseloxidationskatalysator eingesetzt wird. Ganz vorteilhaft wird der erfindungsgemäß Filter in Kombination mit einem Dreiwegkatalysator, insbesondere abströmseitig von diesem eingesetzt. Insbesondere vorteilhaft ist es, wenn der Filter selbst ein dreiwegkatalytisch aktiver Filter ist. Für alle diese Anwendungen eignen sich die nach dem erfindungsgemäßen Verfahren hergestellten, ggf. mit katalytisch aktivem Pulver beschichteten Filter. Bevorzugt ist die Anwendung der erfindungsgemäßen Filter zur Behandlung von Abgasen eines stöchiometrisch betriebenen Verbrennungsmotors. Die für den erfindungsgemäßen Wandflussfilter beschriebenen bevorzugten Ausführungsformen gelten mutatis mutandis auch für die hier erwähnte Verwendung.

Die Anforderungen an Benzinpartikelfilter unterscheiden sich dabei deutlich von den Anforderungen an Dieselpartikelfilter (DPF). Dieselmotoren ohne DPF können bis zu zehnfach höhere Partikelemissionen, bezogen auf die Partikelmasse, aufweisen als Benzinmotoren ohne GPF (Maricq et al., SAE 1999-01-01530). Außerdem fallen beim Benzinmotor deutlich weniger Primärpartikel an und die Sekundärpartikel (Agglomerate) sind deutlich kleiner als beim Dieselmotor. Die Emissionen bei Benzinmotoren liegen im Bereich von Partikelgrößen kleiner 200 nm (Hall et al., SAE 1999-01-3530) bis 400 nm (Mathis et al., Atmospheric Environment 38 4347) mit dem Maximum im Bereich von rund 60 nm bis 80 nm. Daher muss die Filtration der Nanopartikel beim GPF hauptsächlich über Diffusionsabscheidung erfolgen. Für Partikel kleiner als 300 nm wird mit abnehmender Größe die Abscheidung durch Diffusion (Brownsche Molekularbewegung) und elektrostatische Kräfte immer bedeutender (Hinds, W: Aerosol technology: Properties and behavior and measurement of airborne particles. Wiley, 2. Auflage 1999).

Trocken im Sinne der vorliegenden Erfindung bedeutet demgemäß den Ausschluss der Anwendung einer Flüssigkeit, insbesondere Wasser. Insbesondere die Herstellung einer Suspension des Pulvers in einer Flüssigkeit zur Verdüsung in einen Gasstrom sollte vermieden werden. Sowohl für den Filter als auch für das Pulver kann eine gewisse Feuchte ggf. tolerierbar sein, sofern das Erreichen des Ziels - die möglichst fein verteilte Abscheidung des Pulvers in oder auf der Eingangsoberfläche - nicht negativ beeinflusst wird. In der Regel ist das Pulver rieselfähig und durch Energieeintrag dispergierbar. Die Feuchtigkeit des Pulvers bzw. des Filters im Zeitpunkt der Beaufschlagung mit dem Pulver sollte weniger als 20 %, bevorzugt weniger als 10 % und ganz besonders bevorzugt weniger als 5 % (gemessen bei 20°C und Normaldruck ISO 11465 neueste Fassung am Anmeldetag) betragen.

Der erfindungsgemäß hergestellte und katalytisch beschichtete Wandflussfilter zeigt eine hervorragende Filtrationseffizienz bei nur moderatem Anstieg des Abgasgegendrucks verglichen mit einem nicht mit Pulver beaufschlagten Wandflussfilter im frischen Zustand. Bevorzugt zeigt der erfindungsgemäße Wandflussfilter eine Verbesserung der Rußpartikelabscheidung (Filterwirkung) im Filter von mindestens 5 %, vorzugsweise mindestens 10 % und ganz besonders bevorzugt mindestens 20 % bei einer relativen Erhöhung des Abgasgegendrucks des frischen Wandflussfilters von höchstens 40%, vorzugsweise von höchsten 20% und ganz besonders bevorzugt höchstens 10% verglichen mit einem nicht mit Pulver behandelten, frischen mit katalytisch aktivem Material beschichteten Filter. Das Pulver lagert sich - wie gesagt - in einer ganz bevorzugten Ausführungsform nur in die offenen Poren des Filters ein und bildet dort eine poröse Matrix. Die geringe Staudruckerhöhung ist wahrscheinlich darauf zurückzuführen, dass durch die erfindungsgemäße Beaufschlagung des Filters mit einem Pulver der Querschnitt der Kanäle auf der Eingangsseite nicht stark verringert wird. Es wird angenommen, dass das Pulver in sich eine poröse Struktur bildet, was sich vermutlich positiv auf den Staudruck auswirkt. Daher sollte ein erfindungsgemäßer Filter gegenüber denen des Standes der Technik, bei denen ein Pulver auf den Wänden der Einlassseite eines Filters abgeschieden oder eine klassische nasstechnische Beschichtung gewählt wurde, ebenfalls einen besseren Abgasgegendruck zeigen.

Dadurch, dass Wandflussfilter, welcher eine oder mehrere katalytische Beschichtungen zoniert auf den Oberflächen der Kanalwände enthält, zur Verminderung der Schadstoffe im Abgas eines Verbrennungsmotors bereitgestellt wird, wobei der trockene Filter auf dessen Eingangsoberfläche mit einem trockenen Pulvergasaerosol, welches vorteilhaft jeweils zumindest eine hochschmelzende Verbindung aufweist, gezielt beaufschlagt wurde, wird eine überaus erfolgreiche Lösung der gestellten Aufgabe erzielt. Die Erfindung wird anhand einiger Beispiele und Figuren näher erläutert.

Die Fig. 1 zeigt eine Lichtmikroskopieaufnahme von einem mit Pulver beaufschlagten Filter. Das Foto zeigt eine Aufsicht auf mehrere Kanalwände in einem Bereich des Filters auf dem sich kein katalytisch aktiver Auf-Wand-Layer befindet. Das Pulver lagert sich selektiv in den Poren der Wand ab und füllt diese auf.

Die Figuren 2 - 8 zeigen unterschiedliche Beschichtungsanordnungen in erfindungsgemäßen katalytisch aktiven Partikelfiltern. Darin bezeichnet
(E) den Eingangskanal/ Anströmkanal des Filters
(A) den Ausgangskanal/ Abströmkanal des Filters
(L) die Länge der Filterwand
(X) katalytische In-Wand Beschichtung
(Y) und (Z) katalytische Auf-Wand Beschichtung
(P) Mit Pulver beaufschlagte Bereiche der Filterwand

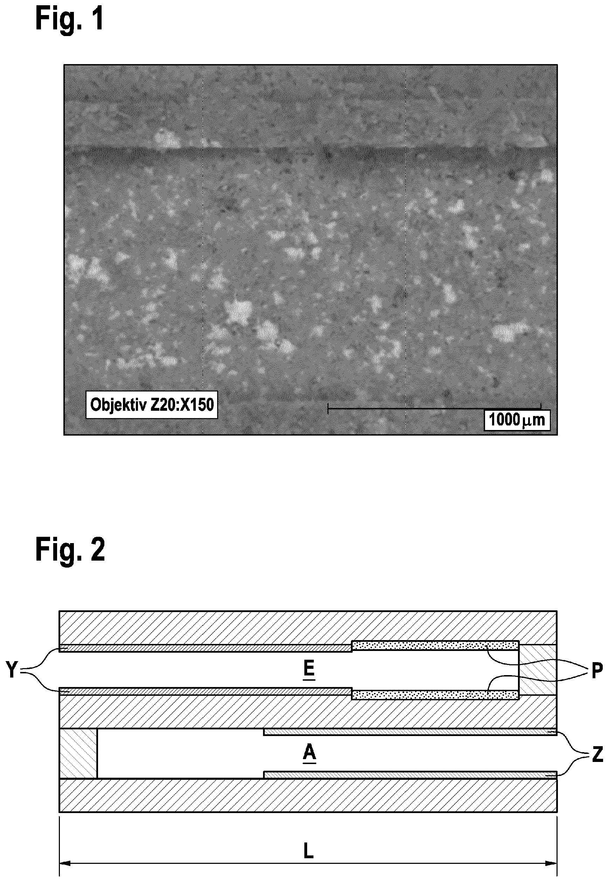

Fig. 2 zeigt schematisch einen Filter, der auf der Ein- (Y) und Auslassseite (Z) je eine Zone eines Auf-Wand-Layers mit einer Zonenlänge von ca. 60% der Gesamtlänge besitzt und im unbeschichteten Teil des Einlasskanals (E) am Ende mit Pulver(P) beaufschlagt ist.

Fig. 3 zeigt den gleichen Aufbau des Filters wie Fig. 2 mit dem Unterschied, dass die beiden Auf-Wand-Layer (X, Y) einen Beschichtungsgradienten von den Stirnseiten zur Mitte des Trägers aufweisen.

Fig. 4 zeigt einen Filter mit einem Auf-Wand-Layer (X) im Einlassbereich E, der mit einem Pulver (P) im Einlasskanal (E) beaufschlagt ist.

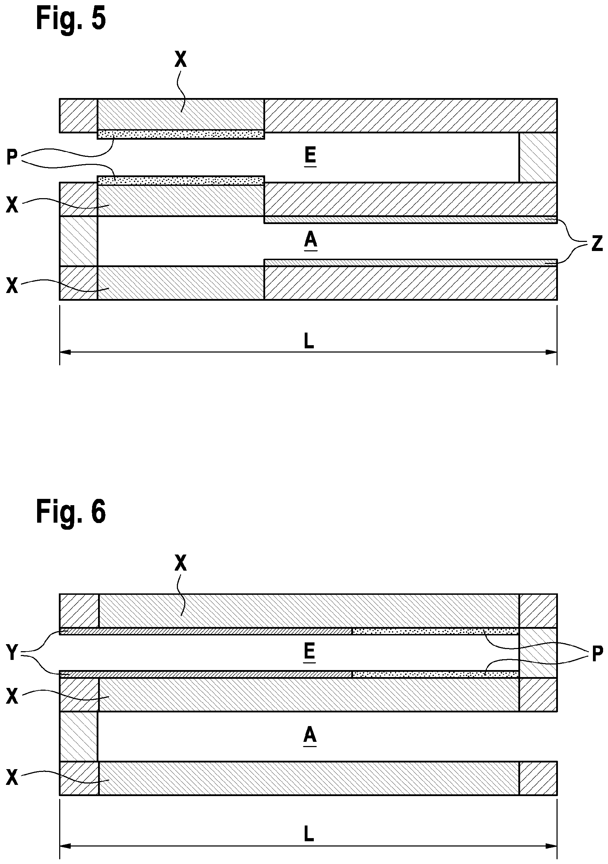

Fig. 5 zeigt einen Filter mit einem Auf-Wand-Layer (Z) im Auslassbereich A und einer Zone mit einer In-Wand-Beschichtung (X), bei dem sich das Pulver (P) in dem Bereich der höchsten Permeabilität niederschlägt.

Fig. 6 zeigt einen Filter, bei dem die Wände der Kanäle komplett mit einer In-Wand-Beschichtung (X) aktiviert sind und der auf der Einlassseite (E) eine Zone mit einem Auf-Wand-Layer (Y) hat und mit Pulver (P) beaufschlagt wurde.

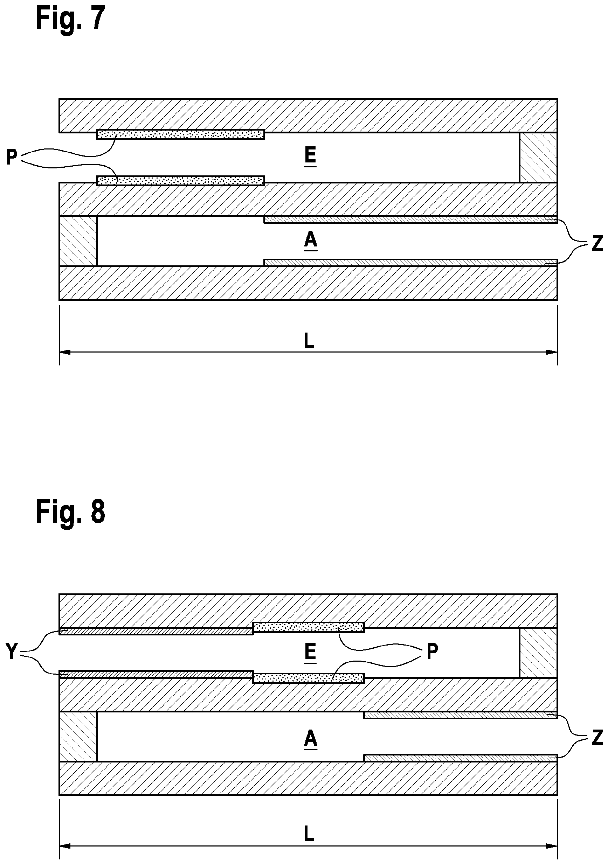

Fig. 7 zeigt den gleichen Filter wie Fig. 5 jedoch ohne katalytisch aktive In-Wand-Beschichtung (X).

Fig. 8 zeigt schematisch einen Filter mit je einem Auf-Wand-Layer im Eingangs- (Y) und Ausgangskanal (Z) mit einer Länge von ca. 30% der Gesamtlänge L und einem mit Pulver (P) beaufschlagten Bereich im Eingangskanal (E).

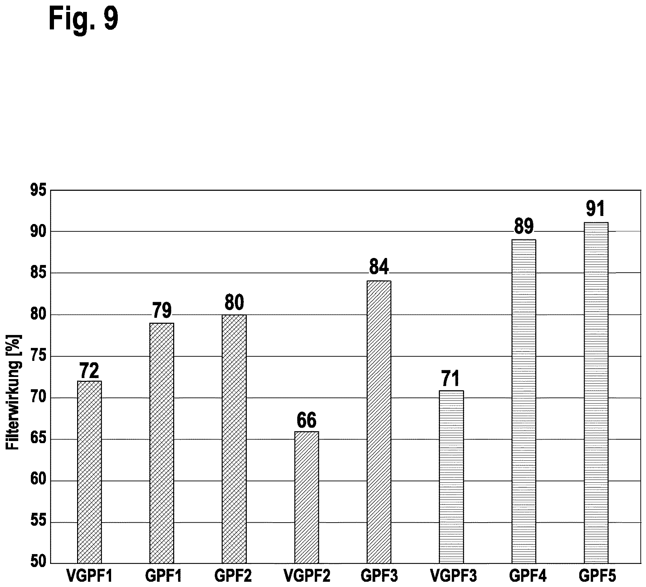

Fig. 9 zeigt die Ergebnisse der Untersuchungen zur Filtrationswirkung aller beschriebenen erfindungsgemäßen Partikelfilter und Partikelfiltern nach dem Stand der Technik.

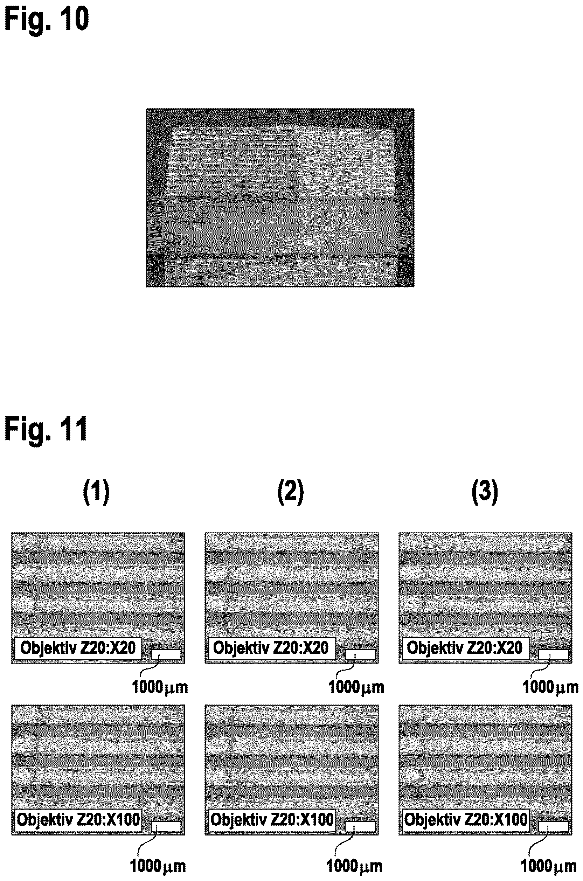

Fig. 10 zeigt ein Foto eines aufgeschlagenen Filters mit einer Zone eines Auf-Wand-Layers in den Einlasskanälen (grau, linke Seite) und den mit Pulver beaufschlagten Bereich (rechte Seite)

Fig. 11 zeigt Vergrößerungen des Filters aus Fig. 10 mit Fotos vom Eingang (1), der Mitte (2) und dem Ausgang (3) des Filters

Fig. 12 zeigt eine schematische Zeichnung einer vorteilhaften Vorrichtung zur Beaufschlagung der Filter mit einem Pulver. Das Pulver 420 oder 421 wird mit dem Gas unter Druck 451 durch die Zerstäuberdüse 440 in der Mischkammer mit dem Gasstrom 454 gemischt und dann durch den Filter 430 gesaugt bzw. gedrückt. Die durchgeschlagenen Partikel werden in dem Abgasfilter 400 herausgefiltert. Das Gebläse 410 sorgt für den nötigen Volumenstrom. Das Abgas wird aufgeteilt in ein Abgas 452 und ein warmes Kreislaufgas 453. Das warme Kreislaufgas 453 wird mit der Frischgas 450 gemischt.

### Beispiele:

### Herstellung und Prüfung der Partikelfilter

Zur Herstellung der in Beispielen und Vergleichsbeispielen beschriebenen katalytisch aktiven Partikelfilter wurden herkömmliche hochporöse Cordieritfilter mit einem runden Querschnitt verwendet. Die Wandflussfiltersubstrate hatten eine Zelldichte von 46,5 Zellen pro Quadratzentimeter bei einer Zellwandstärke von 0,22 mm. Sie wiesen eine Porosität von 65% und eine mittlere Porengröße von 18 µm auf.

Im Vergleichsbeispiel 1 wurde in den Abströmkanälen eine Beschichtungssuspension aufgebracht. Im Vergleichsbespiel 2 wurden in zwei Schritten in die Einströmkanäle und Abströmkanäle Beschichtungssuspensionen aufgebracht. Der im Vergleichsbeispiel 3 beschriebene Filter enthält sowohl eine in der Wand angeordnete Beschichtung als auch eine in den Anströmkanälen aufgebrachte Beschichtungssuspension. Nach dem Aufbringen jeder Beschichtungssuspension wurden die Wandflussfilter getrocknet und bei 500°C für die Dauer von 4 Stunden kalziniert. Die Aufbringung der Beschichtungssuspension erfolgte nach Maßgabe des Fachmannes (wie in DE102010007499A1 beschrieben)

Im Falle der erfindungsgemäßen Partikelfilter (Beispiele 1 bis 5) wurden die Filter aus den Vergleichsbeispielen 1 - 3 zusätzlich in den Eingangskanälen mit einem Pulver beaufschlagt.

Die so erhaltenen katalytisch aktiven Filter wurden auf ihre Frischfiltrationseffizienz am Motorprüfstand im Realabgas eines überwiegend (>50% der Betriebszeit) und im Mittel (mittleres Lambda über die Laufzeit) stöchiometrischen Luft/Kraftstoff-Gemisch betriebenen Motors untersucht. Dabei wurde ein weltweit einheitliches Testverfahren zur Bestimmung der Abgasemissionen, kurz WLTP (Worldwide harmonized Light vehicles Test Procedure), angewendet. Der verwendete Fahrzyklus war WLTC Class 3. Der jeweilige Filter wurde motornah direkt nach einem konventionellen Dreiwegekatalysator eingebaut. Dieser Dreiwegekatalysator war bei allen gemessenen Filtern derselbe. Jeder Filter wurde einem WLTP unterzogen. Um die Partikelemissionen während der Testung detektieren zu können, wurden die Partikelzähler vor dem Dreiwegekatalysator und nach dem Partikelfilter eingebaut.

Einige katalytisch aktive Partikelfilter wurden außerdem zusätzlich einer Motorprüfstandsalterung unterzogen. Die Alterung bestand aus einer Schubabschaltungsalterung mit 950°C Abgastemperatur vor Katalysatoreingang (Maximale Betttemperatur 1030°C). Die Alterungszeit betrug 38 Stunden. Nach der Alterung wurden die Filter auf ihre katalytische Aktivität untersucht.

Bei der Untersuchung der katalytischen Aktivität wurde an einem Motorprüfstand das Anspringverhalten (Light-Off) der Partikelfilter bei konstanter mittlerer Luftzahl A und die dynamische Umsetzung bei Änderung von A geprüft.

### Vergleichsbeispiel 1:

Auf Wandflussfilter mit einem Durchmesser von 118 mm und einer Länge von 152 mm wurde eine edelmetallhaltige Beschichtungssuspension, welche ein Cer/Zirkon-Mischoxid, ein mit Lanthan dotiertes Aluminiumoxid und Bariumsulfat enthält, auf 80 % der Länge des Ausgangskanals des Filters aufgebracht und anschließend bei 500°C kalziniert. Die Korngröße der Oxide der Beschichtungssuspension wurde hierbei so gewählt, dass die Suspension überwiegend auf die Filterwand aufgetragen wird (lediglich eine geringe Menge des Feinstanteils der Beschichtungspartikel dringt dabei in die Poren der Wand ein; weniger als 10%). Die Beschichtungsmenge des VGPF1 entsprach nach Kalzinierung 67 g/l, bezogen auf das Substratvolumen.

### Vergleichsbeispiel 2:

Auf einen Wandflussfilter mit einem Durchmesser von 118 mm und einer Länge von 118 mm wurde im ersten Schritt eine edelmetallhaltige Beschichtungssuspension, welche ein Cer/Zirkon-Mischoxid, ein mit Lanthan dotiertes Aluminiumoxid und Bariumsulfat enthält, auf 60 % der Länge des Eingangskanals aufgebracht und anschließend kalziniert. In einem zweiten Beschichtungsschritt wurde eine weitere edelmetallhaltige Beschichtungssuspension auf 60% der Länge des Ausgangskanals aufgebracht und anschließend kalziniert. Auch die im zweiten Beschichtungsschritt verwendete Beschichtungssuspension enthielt ein Cer/Zirkon-Mischoxid, ein mit Lanthan dotiertes Aluminiumoxid und Bariumsulfat. Die Korngröße der Oxide der Beschichtungssuspension wurde hierbei so gewählt, dass die die Suspension überwiegend auf die Filterwand aufgetragen wird. Die Beschichtungsmenge des VGPF2 nach Kalzinierung entsprach 100 g/l, bezogen auf das Substratvolumen.

### Vergleichsbeispiel 3:

Auf einen hochporösen Wandflussfilter mit einem Durchmesser von 132 mm und einer Länge von 102 mm wurde im ersten Schritt eine edelmetallhaltige Beschichtungssuspension, welche ein Cer/Zirkon-Mischoxid, ein mit Lanthan dotiertes Aluminiumoxid und Bariumsulfat enthält, auf die gesamte Länge des Filters aufgebracht und anschließend kalziniert. Die Korngröße der Oxide der Beschichtungssuspension wurde hierbei so gewählt, dass sich die Suspension überwiegend in der Filterwand befindet; >90%). Die Beschichtungsmenge nach Kalzinierung entsprach 100 g/l, bezogen auf das Substratvolumen.

In einem zweiten Beschichtungsschritt wurde eine weitere edelmetallhaltige Beschichtungssuspension auf 60% des Eingangskanals aufgebracht und anschließend kalziniert. Auch die im zweiten Beschichtungsschritt verwendete Beschichtungssuspension enthielt ein Cer/Zirkon-Mischoxid, ein mit Lanthan dotiertes Aluminiumoxid und Bariumsulfat. Die Korngröße der Oxide der Beschichtungssuspension wurde hierbei so gewählt, dass die die Suspension überwiegend auf die Filterwand aufgetragen wird. Die Beschichtungsmenge des VGPF3 nach Kalzinierung entsprach 132 g/l, bezogen auf das Substratvolumen.

Um die Filtrationseffizienz der in den Vergleichsbeispielen 1 bis 3 beschriebenen katalytisch beschichteten Filter zu steigern, wurden dessen Anströmkanäle mit verschiedenen Pulverarten und Mengen beaufschlagt. Dabei wurden die Beschichtungsparameter so gewählt, dass das verwendete Pulver hauptsächlich in dem Bereich des Substrats abgeschieden wurde, in dem sich keine Aufwandbeschichtung befand (Stellen höchster Permeabilität). Die Herstellung der erfindungsgemäßen Filter GPF1 bis GPF5 wird in den folgenden Beschreibungen erläutert.

In den Beispielen wurde der Einfluss der Art und Menge des verwendeten Pulvers bei unterschiedlichen Beschichtungsvarianten der katalytischen Materialien auf die Filtrationseffizienz und katalytische Wirksamkeit untersucht.

### Beispiel 1:

Um die Filtrationseffizienz des im Vergleichsbeispiel 1 beschriebenen katalytisch beschichteten Filters VGPF1 zu steigern, wurden die Anströmkanäle des Filters mit 4 g/l eines hochporösen Aluminiumoxids beaufschlagt. Die relative Staudruckerhöhung des GPF1 im Vergleich zum VGPF1 betrug 8,6 mbar. Der im Beispiel 1 beschriebene Filter GPF1 ist in Fig. 7 skizziert.

### Beispiel 2:

Um die Filtrationseffizienz des im Vergleichsbeispiel 1 beschriebenen katalytisch beschichteten Filters VGPF1 zu steigern, wurden die Anströmkanäle des Filters mit 0,2 g/l eines hochschmelzenden pyrogenen Aluminiumoxids beaufschlagt. Die relative Staudruckerhöhung des GPF1 im Vergleich zum VGPF1 betrug 5 mbar. Der im Beispiel 2 beschriebene Filter GPF2 ist in Fig. 7 skizziert.

### Beispiel 3:

Um die Filtrationseffizienz des im Vergleichsbeispiel 2 beschriebenen katalytisch beschichteten Filters VGPF2 zu steigern, wurden die Anströmkanäle des Filters mit 10 g/l eines hochporösen Aluminiumoxids beaufschlagt. Der im Beispiel 3 beschriebene Filter GPF3 ist in Fig. 2 skizziert.

### Beispiel 4:

Um die Filtrationseffizienz des im Vergleichsbeispiel 3 beschriebenen katalytisch beschichteten Filters VGPF3 zu steigern, wurden die Anströmkanäle des Filters mit 4 g/l eines hochporösen Aluminiumoxids beaufschlagt. Der im Beispiel 4 beschriebene Filter GPF4 ist in Fig. 4 skizziert.

### Beispiel 5:

Um die Filtrationseffizienz des im Vergleichsbeispiel 3 beschriebenen katalytisch beschichteten Filters VGPF3 zu steigern, wurden die Anströmkanäle des Filters mit 7 g/l eines hochporösen Aluminiumoxids beaufschlagt. Der im Beispiel 5 beschriebene Filter GPF5 ist in Fig. 4 skizziert.

### Diskussion der Ergebnisse aus Filtrationseffizienzmessunqen der in Vergleichsbeispielen und Beispielen beschriebenen Partikelfilter VGPF1 bis VGPF3 sowie GPF1 bis GPF5

Wie bereits beschrieben wurden die in Vergleichsbeispielen und Beispielen hergestellten katalytisch aktiven Filter an einem Motorprüfstand jeweils einem WLTP unterzogen um dessen Filterwirkung zu untersuchen. Die Ergebnisse aus diesen Untersuchungen wurden in der Fig. 9 dargestellt. Fig. 9 zeigt Filtrationswerte, die sich aus den Rohpartikelemmisionen und Partikelemissionen nach dem jeweiligen Filter während einer WLTP Prozedur ergeben haben.

Die Vorteile der erfindungsgemäßen Filter GPF1 bis GPF5 sind während der Filterwirkungsmessung deutlich zu beobachten. Eine Beaufschlagung des Filters mit einem Pulver führt zu einer Filtrationseffizienzerhöhung bis zu 20%. Dabei lässt sich die gewünschte Filtrationseffizienz durch die verwendetet Pulvermenge einstellen.

Der Austausch eines hochporösen Aluminiumoxids (GPF1) durch ein pyrogenes Aluminiumoxid (GPF2) verringert sich die verwendete Pulvermenge von 4 g/l auf 0,2 g/l. Es führt zu einer Ersparnis des eingesetzten Pulvers um 500 Gewichts-% bei einer gleichbleibenden Filtrationswirkung und einem niedrigeren Staudruck.

Um zu prüfen, ob die mit Pulver beaufschlagten Filter eine hohe katalytische Aktivität aufweisen, wurden die Partikelfilter GPF4 und GPF5 einer Motorprüfstandsalterung und einer anschließenden Messung des Anspringverhaltens "Light-Off" unterzogen.

Die nachfolgende Tabelle enthält die Temperaturen T₅₀, bei denen jeweils 50% der betrachteten Komponente umgesetzt werden. Dabei wurde das Anspringverhalten bei stöchiometrischer Abgaszusammensetzung (λ =0,999 mit ±3,4% Amplitude) bestimmt. Die Standardabweichung beträgt bei diesem Test t2°C.

**Tabelle 1 enthält die "Light-Off"-Daten für die gealterten Filter VGPF3, GPF4 und GPF5. Tabelle 1:**

| | T₅₀ HC stöch | T₅₀ CO stöch | T₅₀ NOx stöch |
|---|---|---|---|
| VGPF3 | 381 | 398 | 395 |
| GPF4 | 386 | 401 | 401 |
| GPF5 | 383 | 401 | 402 |

Wie die Ergebnisse zeigen führt die Beaufschlagung der katalytisch aktiven Filter mit einem Pulver zu einer deutlichen Erhöhung der Filtrationseffizienz bei einer gleichbleibenden hohen katalytischen Aktivität und einem niedrigen Staudruckanstieg. Die Wahl des Pulvers kann außerdem die verwendeten Mengen des Pulvers deutlich reduzieren.

Es konnte erfolgreich gezeigt werden, dass sich die katalytische Wirksamkeit der gezont beschichteten Wandflussfilter, der Abgasgegendruck und die Filtrationseffizienz gezielt den Kundenanforderungen anpassen lassen. Ein entsprechend hergestellter Wandflussfilter war aus dem Stand der Technik so noch nicht bekannt.

## Patentansprüche

1. Wandflussfilter zur Entfernung von Partikeln aus dem Abgas von Verbrennungsmotoren, das ein Wandflussfilter der Länge L und mindestens einer katalytisch aktive Beschichtung Y und/oder Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, sich die Beschichtung Y in den Kanälen E auf den Wänden der Oberflächen O_{E} befindet, wobei sich die Beschichtung auf den Wänden der Oberfläche O_{E} ausgehend vom ersten Ende des Wandflussfilters auf einer Länge von weniger als der Länge L erstreckt, sich die Beschichtung Z in den Kanälen A auf den Wänden der Oberflächen O_{A} befindet, wobei sich die Beschichtung auf den Wänden der Oberfläche O_{A} ausgehend vom zweiten Ende des Wandflussfilters auf einer Länge von weniger als der Länge L erstreckt,
**dadurch gekennzeichnet, dass**
der Einlassbereich E des Filters zusätzlich mit zumindest einem trockenen Pulvergasaerosol beaufschlagt worden ist.

2. Wandflussfilter nach Anspruch 1,
**dadurch gekennzeichnet, dass**
sich Beschichtung Y ausgehend vom ersten Ende des Wandflussfilters auf einer Länge von bis zu 90 % der Länge L erstreckt.

3. Wandflussfilter nach Anspruch 1 und/oder 2,
**dadurch gekennzeichnet, dass**
sich Beschichtung Z ausgehend vom zweiten Ende des Wandflussfilters auf einer Länge von bis zu 90 % der Länge L erstreckt.

4. Wandflussfilter nach einem der vorhergehenden Ansprüche,
**dadurch gekennzeichnet, dass**
die Beschichtung Y und/oder Z mindestens 1,25 cm lang sind.

5. Wandflussfilter nach einem der vorhergehenden Ansprüche,
**dadurch gekennzeichnet, dass**
die Beschichtung Y und/oder Z einen Dickegradienten über die Länge L dergestalt aufweist, dass an den Enden Wandflussfilters die geringste Dicke der Beschichtung Y und/oder Z vorherrscht.

6. Wandflussfilter nach einem der vorhergehenden Ansprüche,
**dadurch gekennzeichnet, dass**
sich eine Beschichtung X in den Wänden des Wandflussfilters befindet, und sich die Beschichtung ausgehend vom ersten oder zweiten Ende des Wandflussfilters auf einer Länge von zu 100 % der Länge L erstreckt.

7. Wandflussfilter nach einem der vorhergehenden Ansprüche,
**dadurch gekennzeichnet, dass**
die Beschichtungen Y und Z jeweils ein oder mehrere Edelmetalle, die auf einem oder mehreren Trägermaterialien fixiert sind, sowie ein oder mehrere Sauerstoffspeicherkomponenten enthalten.

8. Wandflussfilter nach einem der vorhergehenden Ansprüche,
**dadurch gekennzeichnet, dass**
die Beschichtungen Y und Z als Sauerstoffspeicher-komponente ein Cer/Zirkonium/Seltenerdmetall-Mischoxide enthalten.

9. Wandflussfilter nach einem der vorhergehenden Ansprüche,
**dadurch gekennzeichnet, dass**
die Menge an Pulver im Partikelfilter unter 50 g/l liegt.

10. Wandflussfilter nach einem der vorhergehenden Ansprüche,
**dadurch gekennzeichnet, dass**
das Pulver ausgewählt ist aus der Gruppe bestehend aus Siliziumdioxid, Aluminiumoxid, Titandioxid, Zirkondioxid, Ceroxid, Eisenoxid, Zinkoxid, Zeolithe, metallsubstituierten Zeoliten oder deren Mischungen.

11. Wandflussfilter nach einem der vorhergehenden Ansprüche,
**dadurch gekennzeichnet, dass**
das Verhältnis von mittlerem Partikeldurchmesser (Q₃-Verteilung; gemessen gemäß neuester IS13320 am Anmeldetag) d50 im trockenen Pulver-Aerosol und dem mittleren Porendurchmesser des Filters nach der Beschichtung mit Washcoat (gemessen nach DIN 66134 neueste Fassung am Anmeldetag) zwischen 0,03 und 2 beträgt.

12. Wandflussfilter nach einem der vorhergehenden Ansprüche,
**dadurch gekennzeichnet, dass** das Pulver sich in den Poren der Filterwände niederschlägt und keine zusammenhängende Schicht auf den Wänden des Filters ausbildet.

13. Wandflussfilter nach einem der vorhergehenden Ansprüche,
**dadurch gekennzeichnet, dass**
die Stampfdichte des Pulvers maximal 900 kg/m³ beträgt.

14. Verfahren zur Herstellung eines katalytisch aktiven Wandflussfilters nach einem der vorhergehenden Ansprüche,
**dadurch gekennzeichnet, dass**
die Beaufschlagung des katalytisch beschichteten Filters mit einem Pulvergasaerosol durch die Dispergierung des Pulvers in einem Gas, welches dann einem Gasstrom zugeführt wird und anschließend eingangsseitig durch den Filter gesaugt wird, erfolgt.

15. Verfahren zur Herstellung eines katalytisch aktiven Wandflussfilters nach Anspruch 14,
**dadurch gekennzeichnet, dass**
das Aerosol mit einer Geschwindigkeit von 5 m/s bis 50 m/s durch den Filter gesaugt wird.

16. Verfahren zur Herstellung eines katalytisch aktiven Wandflussfilters nach einem der vorhergehenden Ansprüche 14 und/oder 15,
**dadurch gekennzeichnet, dass**
das Pulver eine Feuchtigkeit von weniger als 20% im Zeitpunkt der Beaufschlagung des Wandflussfilters besitzt.

17. Verwendung eines katalytisch aktiven Wandflussfilters nach einem der Ansprüche 1 bis 13 zur Minderung schädlicher Abgase eines Verbrennungsmotors, insbesondere für stöchiometrisch betriebene Verbrennungsmotoren.
